# EUROPEAN PATENT SPECIFICATION

(11) **EP 0 921 613 B1**
(45) Date of publication and mention of the grant of the patent: **19.02.2003**
(21) Application number: 98122689.7
(22) Date of filing: 30.11.1998
(51) Int. Cl.: H01S 3/08, H04B 10/14

(54) **Compact solid-state laser and transmitter using the same**
Kompakter Festkörperlaser und Sender unter Verwendung desselben
Laser compact à matériau amplificateur solide et transmetteur utilisant le même matériau

(30) Priority: 05.12.1997 JP 33527697
(43) Date of publication of application: 09.06.1999
(73) Proprietor: Hitachi, Ltd., Chiyoda-ku, Tokyo 101-8010 (JP)
(72) Inventor: Tomaru, Tatsuya, Hiki-gun, Saitama-ken 350-0321 (JP); Petek, Hrvoje, Iruma-gun, Saitama-ken 350-0456 (JP)
(74) Representative: Strehl Schübel-Hopf & Partner

(56) References cited:
- EP-A- 0 851 205
- PATENT ABSTRACTS OF JAPAN vol. 016, no. 188 (E-1198), 7 May 1992 (1992-05-07) -& JP 04 025084 A (MITSUBISHI ELECTRIC CORP), 28 January 1992 (1992-01-28)
- SOROKINA I T ET AL: "Femtosecond pulse generation from the novel low-loss chirped-mirror dispersion controlled Cr:LiSAF and Cr:LiSGaF lasers" OSA TRENDS IN OPTICS AND PHOTONICS SERIES - VOL.10 ADVANCED SOLID STATE LASERS - ORLANDO, FL, USA, 27-29 JAN. 1997, pages 322-325, XP000913669 1997, Washington, DC, USA, Opt. Soc. America, USA ISBN: 1-55752-468-8
- BOUMA B E ET AL: "Compact Kerr-lens mode-locked resonators" OPTICS LETTERS, 15 JAN. 1996, OPT. SOC. AMERICA, USA, vol. 21, no. 2, pages 134-136, XP000629075 ISSN: 0146-9592

## Description

### BACKGROUND OF THE INVENTION

The present invention relates to a compact solid-state laser, and particularly to a compact solid-state laser used for the multiwavelength optical source for the wavelength-division-multiplexed communication system, the wide-spectrum optical source for spectroscopy, the ultra-short pulse source for distance measurement, the ultra-short pulse source for instrumentation, and the like. The invention also relates to a transmitter using this compact solid-state laser.

Various cavity structures for the solid-state laser have been proposed, as described for example in publication "Ultra Short Pulse Technology" ("KOGAKU" Japanese Journal of Optics, Vol.24, No.7, pp.378. Their basic structure includes four or more mirrors which form a cavity, a gain crystal as gain medium, and a prism pair or a grating pair which compensates the dispersion attributable to the gain crystal.

However, this basic structure has too many component parts and needs to space out the prism pair or grating pair by several tens centimeters for dispersion compensation, and therefore it does not allow the compact design of solid-state laser. In the case of pulsative operation, the repetition frequency cannot be raised unless the cavity length is made short. The conventional solid-state laser has a repetition frequency of around 100 MHz, whereas the solid-state laser used for the communication system must have a repetition frequency of several gigahertz or higher.

There is a proposal for making the solid-state laser compact so that its repetition frequency is higher, as described in the article entitled "Compact Kerr-lens model-locked resonator" by B.E.Bouuma et al. in OPTICS LETTERS, Vol.21, No.2, pp.134-136, published in 1996. The proposed compact Kerr-lens model-locked resonator has its cavity made up of three elements including a gain crystal, a curved mirror, and a prismatic output coupler.

### SUMMARY OF THE INVENTION

It is an object of the present invention to make the solid-state laser compact so that its repetition frequency is several gigahertz or higher and it is usable for the communication system.

For making a compact solid-state laser, it is necessary to reduce the number of component parts and compensate the dispersion attributable to the gain crystal without using the prism pair or grating pair. The above-mentioned proposal by B.E.Bouuma et al. is using a prism and a crystal in pair, instead of using a prism pair, for dispersion compensation, thereby reducing the number of cavity elements to three so as to accomplish a compact solid-state laser.

In contrast, the present invention is intended to offer a compact solid-state laser which is designed to compensate the dispersion by means of a chirped mirror formed by multilayer coating (described in the article entitled "Chirped multilayer coating for broadband dispersion control in femtsecond laser" by Robert Szipocs et al. in OPTICS LETTERS, Vol. 19, No.3, pp. 201-203, published in 1994), so that the cavity is virtually formed of only two elements of a chirped mirror and a gain crystal. The invention is defined in claims 1 and 14. Various embodiments are defined in the dependent claims. Specifically, the gain crystal has its one side rendered the reflection coating, chirped-mirror coating, or saturable-absorber mirror coating so that it functions as a mirror, with the chirped mirror serving for another mirror of the cavity, thereby reducing the number of mirrors required.

### BRIEF DESCRIPTION OF THE DRAWINGS

Fig. 1 is a diagram showing the arrangement of a compact solid-state laser based on an embodiment of this invention;
Fig. 2 is a diagram showing the arrangement of a compact solid-state laser based on another embodiment of this invention;
Fig. 3 is a diagram showing the arrangement of a compact solid-state laser based on still another embodiment of this invention;
Fig. 4 is a diagram showing the arrangement of a compact solid-state laser based on still another embodiment of this invention;
Fig. 5 is a diagram showing an embodiment of the gain crystal which can be used for the inventive compact solid-state laser;
Fig. 6 is a diagram showing another embodiment of the gain crystal which can be used for the inventive compact solid-state laser;
Fig. 7 is a diagram showing still another embodiment of the gain crystal which can be used for the inventive compact solid-state laser;
Fig. 8 is a diagram showing an embodiment of the chirped mirror which can be used for the inventive compact solid-state laser;
Fig. 9 is a diagram showing another embodiment of the chirped mirror which can be used for the inventive compact solid-state laser;
Fig. 10 is a diagram showing the arrangement of a compact solid-state laser in which a Brewster-cut gain crystal is used and the lens in optical source is tilted for astigmatism compensation.
Fig. 11 is a diagram showing the arrangement of a compact solid-state laser in which a glass or fused-silica plate is set to break rotational symmetry with respect to optical beam and to improve polarization characteristics.
Figs. 12A and 12B are a plan view and side view of a transmitter of the wavelength-division-multiplexed communication system, with the inventive compact solid-state laser being applied thereto; and
Fig. 13 is a perspective view of the compact solid-state laser used in the transmitter shown in Fig. 10A.

### DESCRIPTION OF THE PREFERRED EMBODIMENTS

Embodiments of this invention will be explained with reference to the drawings.

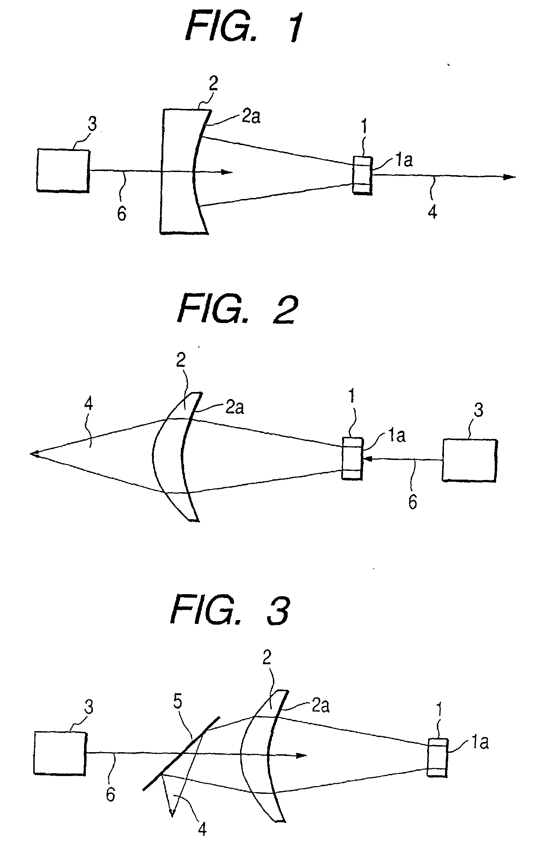

Fig. 1 through Fig. 4 show the arrangements of compact solid-state laser based on the embodiments of this invention. The compact solid-state laser has its cavity formed between the right-side reflection surface 1a of a gain crystal 1 and the right-side reflection surface 2a of a chirped mirror 2. Reference numeral 6 denotes the pumping light directed to the gain crystal 1, 3 is the optical source of the pumping light, 4 is the laser output, and 5 is a dichroic mirror which diverts the course of the laser output 4.

The compact solid-state laser can have several arrangements depending on the manner of leading in the pumping light 6 and leading out the laser output 4, of which four representative types are shown in Fig. 1 through Fig. 4.

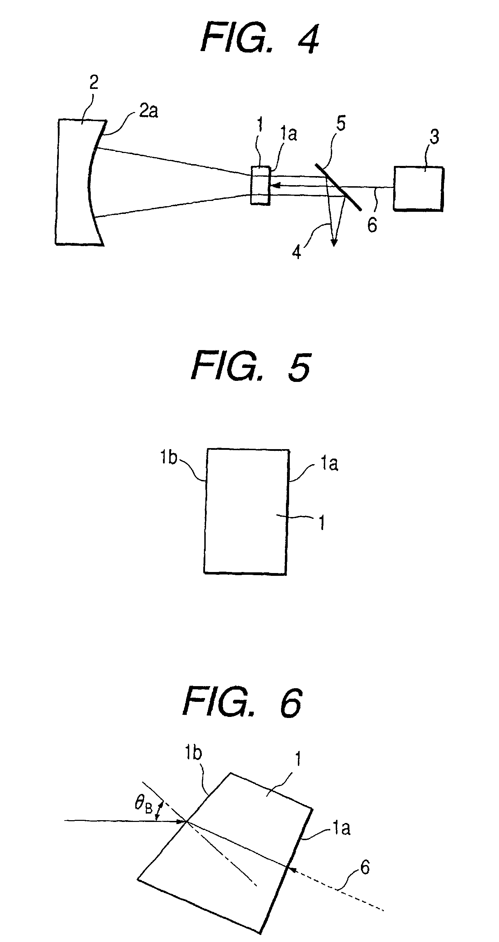

In the arrangement of Fig. 1, the pumping light 6 is incident to the chirped mirror 2 from its back, and the laser output 4 is led out from the reflection surface 1a of the gain crystal 1. In the arrangement of Fig. 2, the pumping light 6 is incident to the reflection surface 1a of the gain crystal 1, and the laser output 4 is led out from the back of the chirped mirror 2. In the arrangement of Fig. 3, the pumping light 6 is introduced into the cavity by being incident to the back of the chirped mirror 2 through the dichroic mirror 5, and the laser output 4 is taken out from the back of the chirped mirror 2 and led out by being diverted by the dichroic mirror 5. In the arrangement of Fig. 4, the pumping light 6 and the laser output 4 exist on the side of the right-side reflection surface 1a. In the arrangement of Fig. 4, the pumping light 6 is introduced into the cavity by being incident to the reflection surface 1a of the gain crystal 1 through the dichroic mirror 5, and the laser output 4 is taken out from the reflection surface 1a of the gain crystal 1 and led out by being diverted by the dichroic mirror 5.

The gain crystal 1 used in the foregoing arrangements of solid-state laser can have various structures as shown in Fig. 5, Fig. 6 and Fig. 7. In any case, the gain crystal 1 has its right-side reflection surface 1a rendered the reflection coating, chirped mirror coating, or saturable-absorber mirror coating. For leading out the laser output 4 from the reflection surface 1a of the gain crystal 1, as in the cases of Fig. 1 and Fig. 4, the reflection surface 1a is coated to become an output-coupler mirror of several percent or less. For leading out the laser output 4 from the back of the chirped mirror 2, as in the cases of Fig. 2 and Fig. 3, the gain crystal 1 has its reflection surface 1a rendered the high-reflection coating.

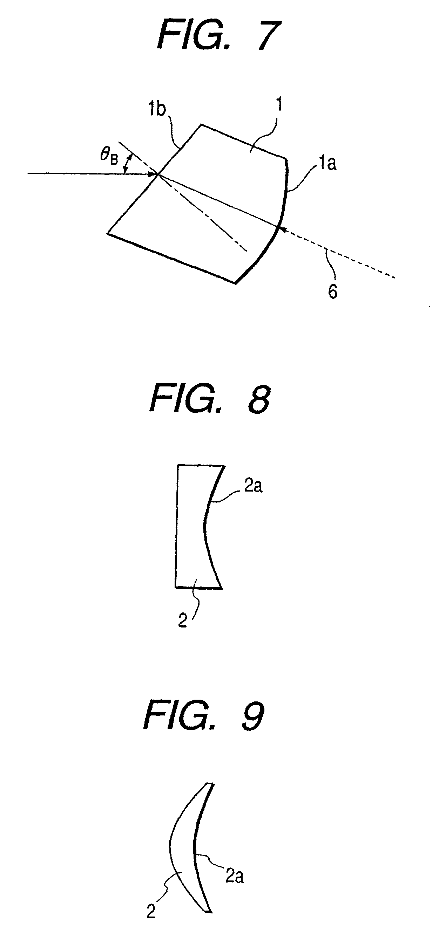

The gain crystal 1 has its left-side surface 1b rendered the anti-reflection coating, and further may be rendered the saturable-absorber coating, instead of the saturable-absorber mirror coating of the reflection surface 1a, as shown in Fig. 5. Or, the gain crystal 1 is polished to provide a Brewster angle θ_{B} so as to suppress the reflection, as shown in Fig. 6 and Fig. 7. Shown in Fig. 6 is the simplest structure of gain crystal having a Brewster angle θ_{B}, with its reflection surface 1a being rendered the planar cutting.

However, the Brewster angle θ_{B} differs slightly depending on the wavelength. Accordingly, in dealing with a wide spectrum as in the case of ultra-short pulse oscillator, the optical path varies in the gain crystal 1. It can be correct effectively by the provision of a cylindrical curving surface for the reflection surface 1a as shown in Fig. 7. Shown by the dashed line 6 in Fig. 6 and Fig. 7 is the incident pumping light 6 of the case of incidence on the side of the reflection surface 1a.

Fig. 8 and Fig. 9 show examples of the structure of chirped mirror 2 which can be used in the foregoing arrangements of solid-state laser. The chirped mirror 2 is a concave mirror having a focal distance of around several tens millimeters, which is determined depending on the repetition frequency. The chirped mirror has a multilayer coating on the right-side surface 2a as shown in Fig. 8 and Fig. 9.

In the arrangement of Fig. 4, where the pumping light 6 and laser output 4 are led in and out on the side of the reflection surface 1a of the gain crystal 1, the chirped mirror 2 may have its unused back surface (opposite to its mirror surface 2a) simply left planar as shown in Fig. 8.

Whereas, in the arrangements of Fig. 1, Fig. 2 and Fig. 3, where the pumping light 6 or laser output 4 is led in or out on the side of the chirped mirror 2 opposite to its mirror surface 2a, the respective optical systems are required on that side. In the arrangement of Fig. 1, where only the pumping light 6 is incident to the back surface of the chirped mirror 2 opposite to its mirror surface 2a, the mirror 2 may have its back surface simply left planar as shown in Fig. 8. In the arrangement of Fig. 2 and Fig. 3, where the laser output 4 is focused, the chirped mirror 2 may be designed to have its solid body working as a focusing lens so that the whole device becomes much smaller.

In addition, in the arrangements of Fig. 1, Fig. 2 and Fig. 3, where the pumping light 6 or laser output 4 is led in or out on the side of the chirped mirror 2 opposite to its mirror surface 2a, it is effective to provide a anti-reflection coating on this surface.

The pumping optical source 3 is a solid-state laser or a semiconductor laser, the latter being useful for the compactness of the whole device. The pumping optical source 3 may include a lens system for the enhancement of pumping ability, and may include an isolator, also.

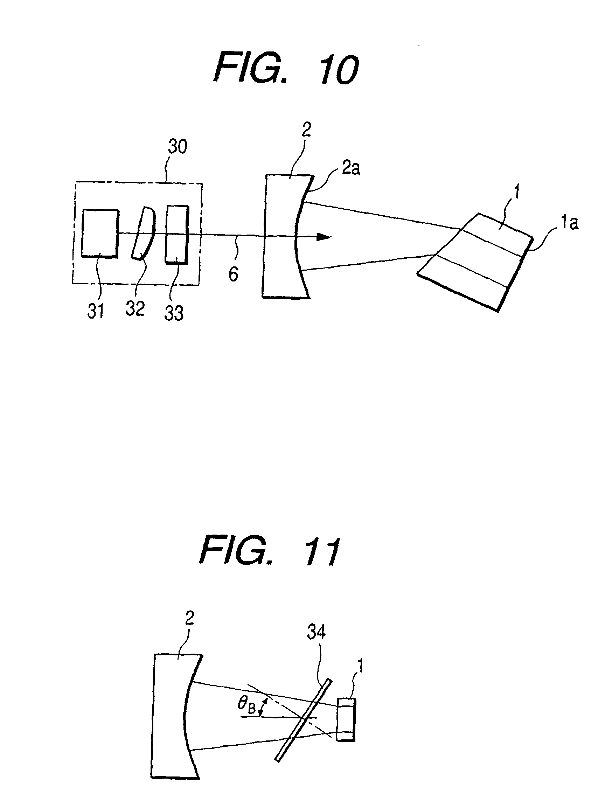

The pumping optical source 3, gain crystal 1 and chirped mirror 2 have a common optical axis obviously, as will be explained in regard to the structure in connection with the transmitter of optical communication system. In case that gain crystal 1 is a Brewster-cut one like Fig. 6 or Fig. 7, and that pumping light 6 is introduced into the cavity through the chirped mirror 2 like Fig. 1 or Fig. 3, then the lens 32 in optical source 30 is tilted by a few or more degrees to compensate astigmatism, as shown in Fig. 10, where an isolator 33 is also drawn.

When gain crystal 1 is a simple plane parallel structure as shown in Fig. 5, then the cavity has rotational symmetry with respect to optical beam, and the light is not polarized, leading to poor laser characteristics. To circumvent this problem, a glass or fused-silica plate 34 may be set in the cavity at a Brewster angle q_{B}, as shown in Fig. 11.

Next, an embodiment of the transmitter, with the foregoing compact solid-state laser being applied thereto, will be explained.

Among the materials useful for the gain crystal 1, which include Cr-doped YAG (Cr:YAG crystal), Ti-doped Al₂O₃, Cr-doped LiSAF, Cr-doped Mg₂SiO_{4,} Nd-doped glass etc., the compact solid-state laser used in this transmitter adopts the Cr:YAG crystal having an oscillation wavelength of the 1.5-µm band. The absorption band of the Cr:YAG crystal has a peak at a wavelength around 1.05 µm.

For the pumping optical source 3, a solid-state laser of Nd:YVO₄, Nd:YLF or Nd:YAG, or a semiconductor laser can be used. The Cr:YAG laser has a wide spectrum (200 nm at maximum) when it is operated in ultra-short pulse oscillation, and accordingly it is useful for the optical source of the wavelength-division-multiplexed communication system.

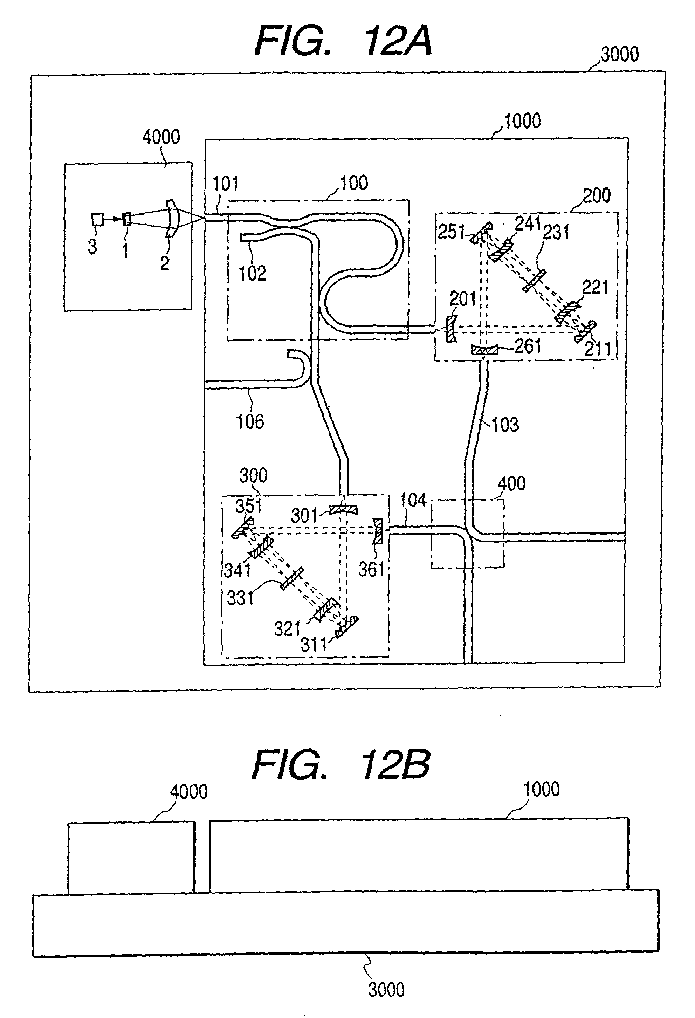

Figs. 12A and 12B show the plan view and side view of a transmitter of wavelength-division-multiplexed communication system which employs a compact solid-state laser of Cr:YAG. Indicated by 4000 is the Cr:YAG laser, which consists of a pumping optical source 3, a gain crystal 1 and a chirped mirror 2, as has been shown in Fig. 2, and it provides all wavelengths necessary for the wavelength-division-multiplexed communication system. Indicated by 1000 is a signal synthesizer, which converts the light, which comes from the Cr:YAG laser 4000 and is incident to the optical fiber 101, into wavelength-division-multiplexed signals in response to the signals to be transmitted. Indicated by 3000 is a constant-temperature maintaining device, which maintains the suitable temperature for the operation of the signal synthesizer 1000 and Cr:YAG laser 4000 and also serves for the chassis of these parts.

The signal synthesizer 1000 can be the one that has been offered in the U.S. Patent Application Serial No.08/997,700 (and the corresponding EP patent publication EP 0 851 205) which is the preceding patent application of the present application, and it will be explained here only briefly.

The incident light from Cr:YAG laser 4000 is introduced into a waveguide 101. The incident light is introduced into an optical path constituting the interferometer 100 through the waveguide 101. Since the other waveguide 102 contacts the waveguide 101 so as to form a separation path in the interferometer 100, the incident light is divided into two optical-paths corresponding to the waveguides 101 and 102. These two optical-paths are brought into contact with each other again at positions where their optical path lengths differ from each other. As a result, interference occurs in the above-described incident light and hence waveforms having predetermined spectrum are obtained from exits of the optical paths 101 and 102. The light emitted from the optical path 101 and the light emitted from the optical path 102 are introduced into the multichannel modulators 200 and 300, respectively. The multichannel modulators 200 and 300 are substantially identical in configuration to each other. The light or optical pulses launched from the optical paths 101 and 102 to the multichannel modulators 200 and 300 are set to parallel light beams by cut-away portions 201 and 301 having plano-concave shapes acting plano-convex lenses, respectively. The parallel light beams transmitted through the cut-away portions 201 and 301 are respectively introduced to cut-away portions 211 and 311 serving as diffraction gratings. The light or optical pulses separated into every frequency by the diffraction gratings 211 and 311 are focused on the spatial light modulators 231 and 331 every frequency through cut-away portions 221 an 321 acting plano-convex lenses. The spatial light modulators 231 and 331 allow the light or optical pulses subjected to optical modulation every frequency to pass therethrough according to the modulating signals S₁ and S₂ because voltages for varying absorptance or refractive index are respectively applied to focusing positions associated with each frequency. The optical pulses transmitted through the spatial light modulators 231 and 331 are respectively introduced to cut-away portions 251 and 351 used to serve as diffraction gratings through cut-away portions 241 and 341 functioning as plano-convex lenses, where they are restored to the parallel light beams. The optical pulses restored to the parallel light beams are focused on their corresponding optical paths 103 and 104 through cut-away portions 261 and 361 acting plano-convex lenses. The optical pulses introduced into the optical paths 103 and 104 are coupled by the optical coupler 400 so that a signal waveform for sending is obtained. In Fig. 12A, signal lines for the spatial light modulators 231 and 331 are omitted.

The output signal is transmitted in an arbitrary manner to a receiving terminal, in which the signal is demultiplexed by means of a proper demultiplexer and detected in terms of individual wavelengths by means of proper detectors.

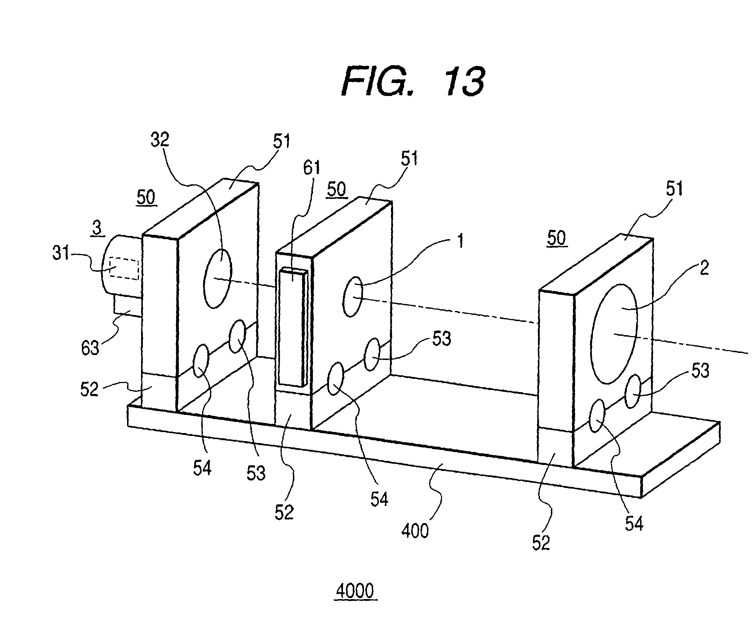

Fig. 13 explains the compact solid-state laser 4000 shown in Fig. 12. Attached on a base plate 400 having a small coefficient of thermal expansion are part holders 50 each consisting of a holder 51 for mounting the pumping optical source 3, gain crystal 1 or chirped mirror 2, and a fixture 52 which serves to fix the holder 50 to the base plate 400. A pair of vertical angle adjusting means 53 and horizontal angle adjusting means 54 are equipped between the holder 51 and fixture 52. After the parts 3, 1 and 2 are mounted on the holders 51 and the fixtures 52 are fixed to the base plate 400, the angle adjusting means 53 and 54 are operated so that these parts have a common optical axis as shown by the dash-dot line.

The part holders 50 and associated angle adjusting means 53 and 54, which are shown very simply in the figure, are specifically commercially-available holders named "CENTER MOUNT", Models 9807,9813M & 9855 manufactured by ν-Focus (Corp.), or holders named "ULTIMA Series" manufactured by Newport (Corp.), for example.

In this embodiment, the pumping optical source 3 is made up of a semiconductor laser 31 and a convergent lens 32. The pumping optical source 3 may also include an isolator between the convergent lens 32 and the gain crystal 1 although it is not shown in Fig.13. The gain crystal 1 produces much heat which cannot be conducted sufficiently to the constant-temperature maintaining device 3000 through the part holder 50 and base plate 400, and therefore there are attached Peltier's elements 61 on both side walls of the holder 51 of the gain crystal 1. Another Peltier's element 63 is attached to the pumping optical source 3 in its section close to the semiconductor laser 31, so that the laser 31 is cooled and the tuning of wavelength based on temperature control is make possible. The wiring of the Peltier's elements are not shown in the figure.

According to this embodiment, the transmitter can be made compact based on the compact solid-state laser and signal synthesizer.

The conventional solid-state laser is not small enough, and therefore it is virtually limited to experimental uses by specialists.

Many of the solid-state laser have wide gain bandwidths and are operative in ultra-short pulsation, and have superior characteristics that are missing in the semiconductor laser. The inventive compact solid-state laser is capable of being built in a variety of measuring instruments.

In the conventional wavelength-division-multiplexed communication system, multiple laser devices are arrayed to arrange optical sources, whereas, using such a solid-state laser as a Cr:YAG laser enables the generation of multiple wavelengths from a single optical source.

The inventive compact solid-state laser which is operative at a higher repetition frequency can readily be incorporated in the wavelength-division-multiplexed communication equipment, and it will increase significantly the transmission capacity of wavelength-division-multiplexed communication system.

## Claims

1. A compact solid-state laser comprising:
a gain crystal (1) which amplifies the light;
a curved chirped mirror (2), with a multi-layer coating provided thereon, which compensates dispersion attributable to said gain crystal (1); and
an optical source (3, 30) which excites said gain crystal (1), one surface of said gain crystal and said curved chirped mirror (2) together forming the cavity of said laser.

2. The laser of claim 1, wherein said one surface of said gain crystal (1) forming the cavity is coated with a reflective multi-layer, a chirped mirror, or a saturable-absorber mirror.

3. The laser of claim 2, wherein the surface (1a) of said gain crystal (1) opposite said one surface is provided with an anti-reflection coating, or provided with a saturable-absorber coating to replace the saturable-absorber mirror coating of said one surface.

4. The laser of claim 2, wherein one surface of said gain crystal (1) transmits a certain amount of light to lead out the laser light (4) from said cavity.

5. The laser of claim 4, wherein the substrate of said chirped mirror (2) having a curved surface (6a) is a solid lens body so that the laser light (4) led out of said cavity is focused.

6. The laser of claim 2, wherein the pumping light (6) from said optical source (3, 30) is led into said cavity through one surface of said gain crystal (1) or one surface of said curved chirped mirror (2).

7. The laser of claim 6, wherein the substrate of said curved chirped mirror (2) is a lens which converges the pumping light (6) from said optical source (3).

8. The laser of claim 1, wherein said gain crystal (1) has an inclination relative to the optical axis such that the light is incident to the surface of said gain crystal opposite said one surface at the Brewster angle.

9. The laser of claim 8, wherein one surface of said gain crystal (1) is planar or cylindrical.

10. The laser of claim 6 or 8, wherein a lens (32) in said optical source (30) is tilted by at least a few degrees to compensate astigmatism in case of said pumping light (6) led into said cavity through one surface of said chirped mirror (2).

11. The laser of claim 1, wherein said chirped mirror (2) has a curved surface and transmits a certain amount of light to lead out the laser light (4) from said cavity.

12. The laser of claim 1, wherein said optical source (3) is a solid-state laser or a semiconductor laser.

13. The laser of any preceding claim, wherein said gain crystal (1) is Cr-doped YAG, Ti-doped Aℓ₂O₃, Cr-doped LiSAF, Cr-doped Mg₂SiO₄, or Nd-doped glass.

14. A transmitter comprising:
a compact solid-state laser (4000) which consists of a pumping light source (3), a gain crystal (1) and a chirped mirror (2) according to claim 1, and is adapted to provide all wavelengths required for wavelength-division multiplexed communication;
a signal synthesiser (1000) which converts the light emitted by said compact solid-state laser (4000) into wavelength-division-multiplexed signals in response to signals to be transmitted; and
a constant-temperature maintaining device (3000) which supports said compact solid-state laser (4000) and said signal synthesiser (1000).

15. The transmitter of claim 14, wherein said pumping light source (3) of the compact solid-state laser (4000), gain crystal (1) and chirped mirror (2) are supported by independent holders (50) so as to be controlled independently for their horizontal and vertical inclinations by adjusting means (53, 54) for aligning said pumping light source (3), gain crystal (1) and chirped mirror (2) along a common optical axis.

16. The transmitter of claim 15, wherein the holder (50) for supporting said gain crystal (1) has a Peltier element (61) attached to it to dissipate heat produced by said gain crystal (1).

17. The transmitter of claim 14, wherein said pumping light source (3) comprises a semiconductor laser (31), with a Peltier element (63) used for the temperature control of semiconductor laser (31) being attached to a position close to said semiconductor laser.

## Patentansprüche

1. Kompakter Festkörperlaser mit
einem Verstärkerkristall (1), der das Licht verstärkt,
einem gekrümmten Chirp-Spiegel (2) mit einer darauf aufgebrachten mehrlagigen Schicht, die dem Verstärkerkristall (1) zuzuschreibende Streuung kompensiert, und
einer Lichtquelle (3, 30), die den Verstärkerkristall (1) anregt, wobei eine Fläche des Verstärkerkristalls und der gekrümmte Chirp-Spiegel (2) miteinander den Hohlraum des Lasers bilden.

2. Laser nach Anspruch 1, wobei die besagte eine, den Hohlraum bildende Fläche des Verstärkerkristalls (1) mit einer reflektierenden Mehrfachschicht, einem Chirp-Spiegel oder einem sättigbaren Absorberspiegel beschichtet ist.

3. Laser nach Anspruch 2, wobei die Fläche (la) des Verstärkerkristalls (1), die der besagten einen Fläche gegenüberliegt, mit einer Antireflexionsschicht oder einer sättigbaren Absorberschicht zum Ersatz der sättigbaren Absorberspiegelschicht an der besagten einen Fläche versehen ist.

4. Laser nach Anspruch 2, wobei die besagte eine Fläche des Verstärkerkristalls (1) eine bestimmte Lichtmenge transmittiert, um das Laserlicht (4) aus dem Hohlraum auszuleiten.

5. Laser nach Anspruch 4, wobei das eine gekrümmte Fläche (6a) aufweisende Substrat des Chirp-Spiegels (2) ein fester Linsenkörper ist, so daß das aus dem Hohlraum ausgeleitete Laserlicht (4) fokussiert ist.

6. Laser nach Anspruch 2, wobei das Pumplicht (6) aus der Lichtquelle (3, 30) durch eine Fläche des Verstärkerkristalls (1) oder eine Fläche des gekrümmten Chirp-Spiegels (2) in den Hohlraum eingeleitet wird.

7. Laser nach Anspruch 6, wobei das Substrat des gekrümmten Chirp-Spiegels (2) eine Linse ist, die das Pumplicht (6) von der Lichtquelle (3) konvergiert.

8. Laser nach Anspruch 1, wobei der Verstärkerkristall (1) zur optischen Achse geneigt ist, so daß das Licht auf die der besagten einen Fläche gegenüberliegende Fläche des Verstärkerkristalls unter dem Brewster-Winkel einfällt.

9. Laser nach Anspruch 8, wobei die besagte eine Fläche des Verstärkerkristalls (1) planar oder zylindrisch ist.

10. Laser nach Anspruch 6 oder 8, wobei eine Linse (32) in der Lichtquelle (30) um mindestens einige Grad schräg gestellt ist, um Astigmatismus zu kompensieren, falls das Pumplicht (6) durch eine Fläche des Chirp-Spiegels (2) in den Hohlraum eingeleitet wird.

11. Laser nach Anspruch 1, wobei der Chirp-Spiegel (2) eine gekrümmte Fläche aufweist und eine bestimmte Lichtmenge transmittiert, um das Laserlicht (4) aus dem Hohlraum auszuleiten.

12. Laser nach Anspruch 1, wobei die Lichtquelle (3) ein Festkörperlaser oder ein Halbleiterlaser ist.

13. Laser nach einem der vorhergehenden Ansprüche, wobei der Verstärkerkristall (1) Cr-dotiertes YAG, Ti-dotiertes Al₂O₃, Cr-dotiertes LiSAF, Cr-dotiertes Mg₂SiO₄ oder Nd-dotiertes Glas ist.

14. Sender mit
einem kompakten Festkörperlaser (4000), der aus einer Pumplichtquelle (3), einem Verstärkerkristall (1) und einem Chirp-Spiegel (2) nach Anspruch 1 besteht und die Erzeugung aller zur Wellenlängenmultiplex-Nachrichtenübertragung erforderlichen Wellenlängen gestattet,
einem Signalsynthesiser (1000), der das von dem kompakten Festkörperlaser (4000) je nach den zu übertragenden Signalen in Wellenlängenmultiplex-Signale umsetzt, und
einer Temperatur-Konstanthalteeinrichtung (3000), auf der der kompakte Festkörperlaser (4000) und der Signalsynthesiser (1000) angeordnet sind.

15. Sender nach Anspruch 14, wobei die Pumplichtquelle (3) des kompakten Festkörperlasers (4000), der Verstärkerkristall (1) und der Chirp-Spiegel (2) auf unabhängigen Haltern (50) angeordnet sind, so daß sie bezüglich ihrer horizontalen und vertikalen Neigungen durch Justiereinrichtungen (53, 54) unabhängig steuerbar sind, um die Pumplichtquelle (3), den Verstärkerkristall (1) und den Chirp-Spiegel (2) längs einer gemeinsamen optischen Achse auszurichten.

16. Sender nach Anspruch 15, wobei an dem Halter (50) zur Aufnahme des Verstärkerkristalls (1) ein Peltier-Element (61) angebracht ist, um von dem Verstärkerkristall (1) erzeugte Wärme zu zerstreuen.

17. Sender nach Anspruch 14, wobei die Pumplichtquelle (3) einen Halbleiterlaser (31) aufweist, und ein Peltier-Element (63) zur Temperatursteuerung des Halbleiterlasers (31) an einer diesem nahen Stelle angebracht ist.

## Revendications

1. Laser à solide compact comportant :
un cristal de gain (1) qui amplifie la lumière,
un miroir comprimé incurvé (2), ayant un revêtement multicouche agencé dessus, qui compense une dispersion pouvant être attribuée audit cristal de gain (1), et
une source optique (3, 30) qui excite ledit cristal de gain (1), une première surface dudit cristal de gain et dudit miroir comprimé incurvé (2) formant ensemble la cavité dudit laser.

2. Laser selon la revendication 1, dans lequel ladite première surface dudit cristal de gain (1) formant la cavité est revêtue d'une multicouche réflectrice, d'un miroir comprimé, ou d'un miroir absorbeur saturable.

3. Laser selon la revendication 2, dans lequel la surface (1a) dudit cristal de gain (1) opposée à ladite première surface est munie d'un revêtement anti-réflexion, ou munie d'un revêtement absorbeur saturable pour remplacer le revêtement de miroir absorbeur saturable de ladite première surface.

4. Laser selon la revendication 2, dans lequel une première surface dudit cristal de gain (1) transmet une certaine quantité de lumière pour extraire la lumière laser (4) depuis ladite cavité.

5. Laser selon la revendication 4, dans lequel le substrat dudit miroir comprimé (2) ayant une surface incurvée (6a) est un corps de lentille solide de sorte que la lumière laser (4) extraite de ladite cavité est focalisée.

6. Laser selon la revendication 2, dans lequel la lumière de pompage (6) provenant de ladite source optique (3, 30) est amenée dans ladite cavité à travers une première surface dudit cristal de gain (1) ou une première surface dudit miroir comprimé incurvé (2).

7. Laser selon la revendication 6, dans lequel le substrat dudit miroir comprimé incurvé (2) est une lentille qui fait converger la lumière de pompage (6) provenant de ladite source optique (3).

8. Laser selon la revendication 1, dans lequel ledit cristal de gain (1) a une inclinaison par rapport à l'axe optique de sorte que la lumière vient frapper la surface dudit cristal de gain opposée à ladite première surface selon l'angle de Brewster.

9. Laser selon la revendication 8, dans lequel une première surface dudit cristal de gain (1) est plane ou cylindrique.

10. Laser selon la revendication 6 ou 8, dans lequel une lentille (32) dans ladite source optique (30) est inclinée d'au moins quelques degrés pour compenser l'astigmatisme dans le cas où ladite lumière de pompage (6) est amenée dans ladite cavité à travers une première surface dudit miroir comprimé (2).

11. Laser selon la revendication 1, dans lequel ledit miroir comprimé (2) a une surface incurvée et transmet une certaine quantité de lumière pour extraire la lumière laser (4) depuis ladite cavité.

12. Laser selon la revendication 1, dans lequel ladite source optique (3) est un laser à solide ou un laser à semi-conducteurs.

13. Laser selon l'une quelconque des revendications précédentes, dans lequel ledit cristal de gain (1) est un YAG dopé par Cr, Al₂O₃ dopé par Ti, LiSAF dopé par Cr, Mg₂SiO₄ dopé par Cr, ou du verre dopé par Nd.

14. Emetteur comportant :
un laser à solide compact (4000) qui est constitué d'une source de lumière de pompage (3), d'un cristal de gain (1) et d'un miroir comprimé (2) selon la revendication 1, et est adapté pour fournir toutes les longueurs d'onde nécessaires pour une communication multiplexée par répartition en longueur d'onde,
un synthétiseur de signal (1000) qui convertit la lumière émise par ledit laser à solide compact (4000) en des signaux multiplexés par répartition en longueur d'onde en réponse à des signaux à transmettre, et
un dispositif de maintien de température constante (3000) qui supporte ledit laser à solide compact (4000) et ledit synthétiseur de signal (1000).

15. Emetteur selon la revendication 14, dans lequel ladite source de lumière de pompage (3) du laser à solide compact (4000), le cristal de gain (1) et le miroir comprimé (2) sont supportés par des supports indépendants (50) de manière à être commandés indépendamment en ce qui concerne leurs inclinaisons horizontale et verticales par des moyens d'ajustement (53, 54) afin d'aligner ladite source de lumière de pompage (3), le cristal de gain (1) et le miroir comprimé (2) le long d'un axe optique commun.

16. Emetteur selon la revendication 15, dans lequel le support (50) destiné à supporter ledit cristal de gain (1) a un élément Peltier (61) fixé à celui-ci pour dissiper une chaleur produite par ledit cristal de gain (1).

17. Emetteur selon la revendication 14, dans lequel ladite source de lumière de pompage (3) comporte un laser à semi-conducteurs (31), un élément Peltier (63) utilisé pour la commande de température du laser à semi-conducteurs (31) étant fixé à une position proche dudit laser à semi-conducteurs.
